# EUROPEAN PATENT APPLICATION

(11) **EP 4 386 545 A1**
(43) Date of publication of application: **19.06.2024**
(21) Application number: 22906156.9
(22) Date of filing: 15.11.2022
(51) Int. Cl.: G06F 9/451

(54) **TERMINAL DISPLAY METHOD AND TERMINAL DISPLAY APPARATUS**

(30) Priority: 15.12.2021 CN 202111537625
(71) Applicant: BYD Company Limited, Shenzhen, Guangdong 518118 (CN)
(72) Inventor: QU, Chengdong, Shenzhen, Guangdong 518118 (CN); SUN, Shicong, Shenzhen, Guangdong 518118 (CN); SUN, Xiaoqi, Shenzhen, Guangdong 518118 (CN); YAN, Yan, Shenzhen, Guangdong 518118 (CN)
(74) Representative: Dehns Germany Partnerschaft mbB
(86) International application number: PCT/CN2022/131847
(87) International publication number: WO 2023/109404

(57) **Abstract**

A display method for a terminal and a display apparatus for a terminal are provided. The method includes: A landscape-mode display configuration of an application is determined based on a portrait-mode display manner of the application when the terminal is in landscape mode. A display operation is performed on the application based on the landscape-mode display configuration. The application does not support landscape-mode display.

## Description

### CROSS REFERENCE TO RELATED APPLICATIONS

The present disclosure claims priority to Chinese Patent Application No. 202111537625.8, filed on December 15, 2021 and entitled "DISPLAY METHOD FOR TERMINAL AND DISPLAY APPARATUS FOR TERMINAL". The entire content of the above-referenced application is incorporated herein by reference.

### FIELD

The present disclosure relates to the field of screen display technologies, and specifically, to a display method for a terminal and a display apparatus for a terminal.

### BACKGROUND

In practice, most intelligent display screens support only portrait-mode applications, and do not support landscape-mode adaptive applications, failing to support terminals. In the related art, content displayed in portrait mode may be stretched and deformed to achieve a landscape-mode display effect. However, such a method leads to abnormal deformation and unfriendly displaying of the display content, greatly affecting user experience.

### SUMMARY

The present disclosure is intended to resolve one of technical problems in the related art at least to some extent. In view of this, the present disclosure provides a display method for a terminal. Applicability of an application applied to the terminal is determined in advance, and a corresponding display operation is performed on an inapplicable application, to effectively avoid the technical problem of stretching and deformation of the application or the limited amount of display content, thereby improving user experience.

The present disclosure further provides a display apparatus for a terminal.

The present disclosure further provides an electronic device.

The present disclosure further provides a computer storage medium.

According to a display method for a terminal in the present disclosure, the display method includes: A landscape-mode display configuration of an application is determined based on a portrait-mode display manner of the application when the terminal is in landscape mode. A display operation is performed on the application based on the landscape-mode display configuration. The application does not support landscape-mode display.

According to some embodiments of the present disclosure, that a landscape-mode display configuration of an application is determined based on a portrait-mode display manner of the application includes: portrait-mode window configuration information of the application is obtained; whether the application supports multi-window display is determined based on the portrait-mode window configuration information; a first landscape-mode configuration of the application is determined if the application does not support multi-window display, where the first landscape-mode configuration is a single-screen display configuration of the application; a second landscape-mode configuration of the application is determined if the application supports multi-window display, where the second landscape-mode configuration is a split-screen display configuration of the application; and the first landscape-mode configuration or the second landscape-mode configuration is regarded as the landscape-mode display configuration.

According to some embodiments of the present disclosure, that a first landscape-mode configuration of the application is determined includes: at least one commonly used window of the application is obtained; a main window configuration corresponding to the portrait-mode window configuration information is determined, and a secondary window configuration corresponding to the at least one commonly used window is determined; and the first landscape-mode configuration of the application is determined based on the main window configuration and the secondary window configuration.

According to some embodiments of the present disclosure, that a second landscape-mode configuration of the application is determined includes: a window quantity of to-be-displayed windows of the application is determined; when the window quantity is one, it is determined that a configuration in which the to-be-displayed window of the application is displayed in the center is regarded as the second landscape-mode configuration of the application; and when the window quantity is at least two, window parameter information is obtained, and the second landscape-mode configuration of the application is determined based on the window parameter information.

According to some embodiments of the present disclosure, the display method further includes: after the configuration in which the to-be-displayed window of the application is displayed in the center is determined, in response to a boundary edition operation performed by a user, the configuration in which the to-be-displayed window of the application is displayed in the center is modified, to obtain a configuration obtained after a boundary modification; and the configuration obtained after the boundary modification is regarded as the second landscape-mode configuration of the application.

According to some embodiments of the present disclosure, the window parameter information includes a window size and a window location, and that the second landscape-mode configuration of the application is determined based on the window parameter information includes: a screen size of the terminal is obtained; multiple display areas of the terminal are determined based on the window size and the screen size; a display configuration of each to-be-displayed window is determined based on the window location and the plurality of display areas; and the second landscape-mode configuration of the application is determined based on the display configuration of each to-be-displayed window.

According to some embodiments of the present disclosure, the display method further includes: the window location is adjusted in response to an adjustment operation performed on the window location, to obtain an adjusted location; and the display configuration of each to-be-displayed window is determined based on the adjusted location and the plurality of display areas.

According to some embodiments of the present disclosure, the display method further includes: a current focus window is determined after the display operation is performed; in response to a touch event performed on the terminal, a touch area corresponding to the touch event is determined; whether the touch area is in the current focus window is determined; when the touch area is not in the current focus window, a window in which the touch area is located is regarded as a new current focus window; and an operation instruction corresponding to the touch event is executed.

According to some embodiments of the present disclosure, that a current focus window is determined includes: the to-be-displayed window is traversed, and at least one first window in a first display state is determined in the to-be-displayed window, where the remaining window other than the at least one first window in the to-be-displayed window is in a second display state; a default focus window is determined in the first window; and the default focus window is regarded as the current focus window.

According to some embodiments of the present disclosure, the at least one first window includes a parent display window and at least one display sub-window, and that the touch event is executed includes: an event type of the touch event is determined; when the event type is a window jump event, the display sub-window is cleared, and a new display sub-window corresponding to the touch event is displayed; and displaying of the current focus window is refreshed when the event type is a non-window jump event.

According to some embodiments of the present disclosure, the display method further includes: after the display operation is performed, in response to a portrait-mode operation of the terminal, the parent display window in portrait mode is displayed; and the at least one display sub-window is set to the second display state.

According to some embodiments of the present disclosure, the display method further includes: each display sub-window is set to the first display state in response to a landscape-mode operation performed on the terminal after the portrait-mode operation; and the display operation is performed on the at least one first window based on the second landscape-mode configuration.

A display apparatus for a terminal in an embodiment of the present disclosure includes: a landscape-mode configuration determining unit, configured to determine a landscape-mode display configuration of an application based on a portrait-mode display manner of the application when the terminal is in landscape mode; and a display unit, configured to perform a display operation on the application based on the landscape-mode display configuration, where the application does not support landscape-mode display.

An electronic device in an embodiment of the present disclosure includes: at least one processor; and a memory communicatively connected to the at least one processor. The memory stores instructions which, when executed by the at least one processor, cause the at least one processor to implement the display method provided in the embodiments of the present disclosure.

A computer-readable storage medium in an embodiment of the present disclosure stores a computer program which, when executed by a processor, cause the processor to implement the method provided in the embodiments of the present disclosure.

In a process of displaying an application applied to the terminal, adaptability is first determined. When it is determined that the current application does not support landscape-mode display, a corresponding landscape-mode display configuration is generated immediately based on a portrait-mode display manner of the application, and a corresponding display operation is performed, thereby effectively meeting an actual landscape-mode display requirement of the user, avoiding an abnormal display of stretching and deformation caused by a conventional forced landscape-mode display, and improving user experience.

Additional aspects and advantages of the present disclosure will be given in part in the following descriptions, become apparent in part from the following descriptions, or be learned from the practice of the present disclosure.

### BRIEF DESCRIPTION OF THE DRAWINGS

The foregoing and/or additional aspects and advantages of the present disclosure will become apparent and comprehensible in the description of the embodiments made with reference to the following accompanying drawings.
FIG. 1 is a flowchart of a specific implementation of a display method for a terminal according to an embodiment of the present disclosure;
FIG. 2 is a flowchart of a specific implementation of determining a landscape-mode display configuration in a display method for a terminal according to an embodiment of the present disclosure;
FIG. 3 is a schematic diagram of determining a first landscape-mode configuration in a display method for a terminal according to an embodiment of the present disclosure;
FIG. 4 is a schematic diagram of determining a first landscape-mode configuration in a display method for a terminal according to another embodiment of the present disclosure;
FIG. 5 is a schematic diagram of displaying only one to-be-displayed window in a display method for a terminal according to an embodiment of the present disclosure;
FIG. 6 is a schematic diagram of displaying two to-be-displayed windows in a display method for a terminal according to an embodiment of the present disclosure;
FIG. 7 is a schematic diagram of adjusting locations of two to-be-displayed windows in a display method for a terminal according to an embodiment of the present disclosure;
FIG. 8 is a schematic diagram of switching to a portrait-mode display manner in a display method for a terminal according to an embodiment of the present disclosure;
FIG. 9 is a schematic structural diagram of a display apparatus for a terminal according to an embodiment of the present disclosure; and
FIG. 10 is a schematic structural diagram of an electronic device according to an embodiment of the present disclosure.

### DETAILED DESCRIPTION

Embodiments of the present disclosure are described in detail below, and examples of the embodiments are shown in accompanying drawings. The same or similar elements or the elements having same or similar functions are denoted by the same or similar reference numerals throughout the description. The embodiments described below with reference to the accompanying drawings are examples, and are intended to explain the present disclosure and cannot be construed as a limitation to the present disclosure.

The terms "system" and "network" in the embodiments of the present disclosure may be used interchangeably. "Multiple" means two or more. In view of this, "multiple" may also be understood as "at least two" in the embodiments of the present disclosure. "And/or" describes an association relationship between associated objects, and indicates that three relationships may exist. For example, A and/or B may represent the following cases: Only A exists, both A and B exist, and only B exists. In addition, the character "/", unless otherwise specified, usually indicates an "or" relationship between the associated objects. In addition, it should be understood that, in the descriptions of the embodiments of the present disclosure, terms "first", "second", and the like are used only for purposes of distinguishing descriptions, and cannot be understood as indicating or implying relative importance as indicating or implying a sequence.

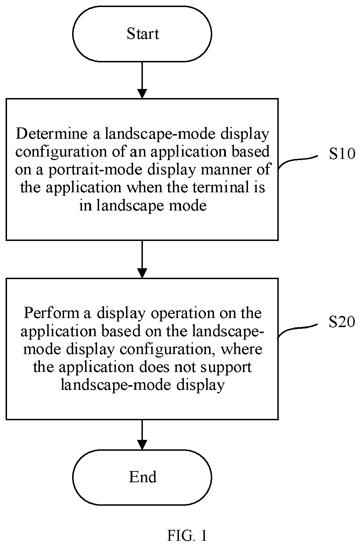

As shown in FIG. 1, an embodiment of the present disclosure provides a display method for a terminal. The display method includes:

(S 10) A landscape-mode display configuration of an application is determined based on a portrait-mode display manner of the application when the terminal is in landscape mode.

(S20) A display operation is performed on the application based on the landscape-mode display configuration, where the application does not support landscape-mode display.

In a possible implementation, the display method provided in this embodiment of the present disclosure is applied to an in-vehicle terminal, and certainly, may also be applied to another display terminal. Details are not described herein again. For example, in this embodiment of the present disclosure, the in-vehicle terminal is in landscape mode by default. The landscape mode is a mode in which a width of a display screen of the in-vehicle terminal is greater than a height of the screen when the in-vehicle terminal is applied. For example, the in-vehicle terminal may be a touchscreen, or may be a shared screen of another mobile terminal. In an application scenario, a user starts an application or displays an application on the in-vehicle terminal. Before a display, display configuration information of the application is first obtained, to implement a better landscape-mode display of the in-vehicle terminal, and provide better user experience for the user. For example, the in-vehicle terminal provided in this embodiment of the present disclosure may be based on an Android operating system, or certainly, may be based on another application system (for example, a macOS system, or a Linux system). When the application is started, an orientation attribute that is of the application and that is configured by using a list file or that is applied for by using code may be obtained, to obtain the display configuration information of the application, and whether a currently displayed application supports landscape-mode display is determined based on the display configuration information.

For example, in this embodiment of the present disclosure, the application does not support landscape-mode display, that is, does not support an adaptive adjustment effect of a size of display content in the application based on a screen placement state. In this case, the landscape-mode display configuration of the application may be further determined based on the portrait-mode display manner of the application, and the corresponding display operation is performed on the application based on the landscape-mode display configuration.

In this embodiment of the present disclosure, adaptability of the application to displaying in the terminal is determined in advance, and display optimization is performed for an application that cannot be displayed in landscape mode. Specifically, a corresponding landscape-mode display configuration is generated for the application based on a portrait-mode display manner of the application, and a corresponding display operation is performed, so that a friendly landscape-mode display is implemented without stretching or deforming display content of the application, to effectively improve user experience.

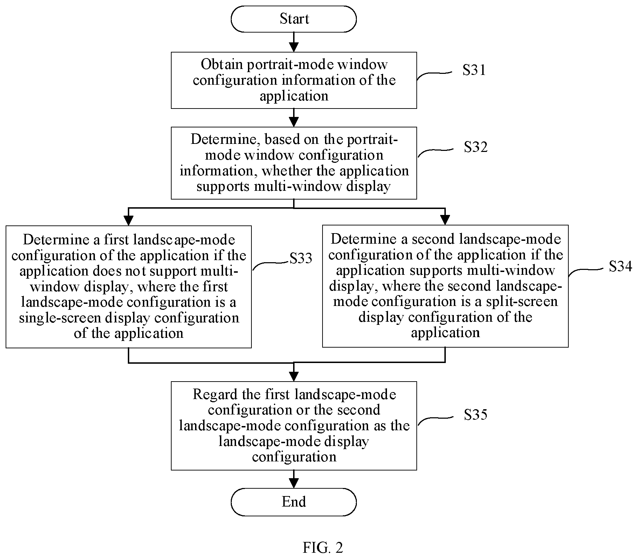

As shown in FIG. 2, in this embodiment of the present disclosure, that a landscape-mode display configuration of an application is determined based on a portrait-mode display manner of the application includes:
(S31) Portrait-mode window configuration information of the application is obtained.
(S32) Whether the application supports multi-window display is determined based on the portrait-mode window configuration information.
(S33) A first landscape-mode configuration of the application is determined if the application does not support multi-window display, where the first landscape-mode configuration is a single-screen display configuration of the application.
(S34) A second landscape-mode configuration of the application is determined if the application supports multi-window display, where the second landscape-mode configuration is a split-screen display configuration of the application.
(S35) The first landscape-mode configuration or the second landscape-mode configuration is regarded as the landscape-mode display configuration.

In a possible implementation, the landscape-mode display configuration of the application is determined after it is determined that the application does not support landscape-mode display. For example, in this embodiment of the present disclosure, the application may be displayed in split screen. For example, the application may be separately displayed on a left screen and a right screen, so that the application is displayed in landscape mode in the portrait-mode display manner. However, in an actual application process, not all applications support a split-screen display. For example, in an embodiment, an application specially developed by a person skilled in the art for an application scenario of the terminal supports a split-screen display effect, and may be displayed in split screen in an actual application process. However, general-purpose software does not support a split-screen display. Therefore, display optimization needs to be further performed for the general-purpose application

Therefore, in this embodiment of the present disclosure, in an actual display process of the application, the portrait-mode window configuration information of the application is first obtained. For example, the portrait-mode window configuration information of the application may be obtained by parsing a resource file of the application. For example, the portrait-mode window configuration information is configuration information used to display the application in portrait mode (that is, a width of a display window of the application is less than a height), and whether the application supports multi-window display is determined based on the portrait-mode window configuration information. In a first embodiment, the application does not support multi-window display. Therefore, the corresponding first landscape-mode configuration needs to be determined for the single-screen display manner of the application.

In this embodiment of the present disclosure, that a first landscape-mode configuration of the application is determined includes: at least one commonly used window of the application is obtained; a main window configuration corresponding to the portrait-mode window configuration information is determined, and a secondary window configuration corresponding to the at least one commonly used window is determined; and the first landscape-mode configuration of the application is determined based on the main window configuration and the secondary window configuration.

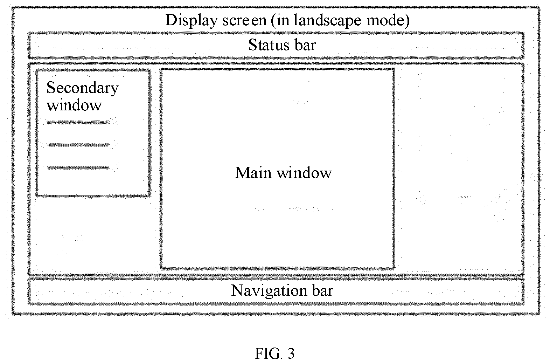

As shown in FIG. 3, in a possible implementation, in a process of determining the first landscape-mode configuration of the application, the at least one commonly used window of the application is further obtained. For example, the commonly used window is determined by the user based on an application window commonly used by the user in a daily use process. After the commonly used window is determined, the main window configuration corresponding to the portrait-mode window configuration information of the application is further determined. For example, in this embodiment of the present disclosure, a main window corresponding to the application is configured to be displayed in the center Certainly, the main window may alternatively be displayed on a side (a left side or a right side). The main window configuration may further include setting information of a size of the main window of the application. For example, a display width/a display height of the application may be increased/decreased. Alternatively, the main window may be set by fitting an upper boundary and a lower boundary of the screen; may be set at a preset interval from the upper boundary and the lower boundary; or the like. A secondary window configuration corresponding to the at least one commonly used window is determined. In this case, the first landscape-mode configuration of the application is determined based on the main window configuration and the secondary window configuration, and corresponding displaying is performed. A secondary window may be configured to be displayed in an upper left corner of the screen, or may be displayed in an upper right corner of the screen. This is not limited herein.

In this embodiment of the present disclosure, a targeted landscape-mode display optimization method is provided for the application based on an actual display configuration of the application, so that the application is allowed to provide a better landscape-mode display effect for the user in a display process, to improve user experience.

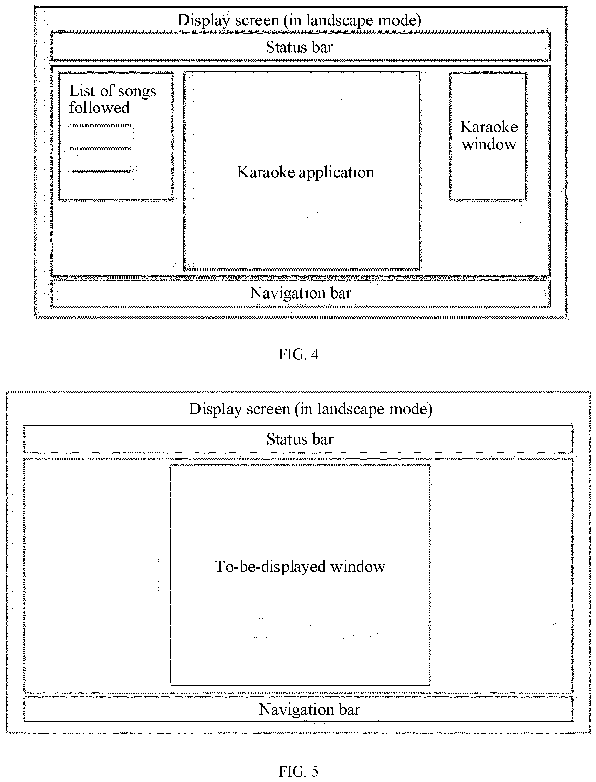

As shown in FIG. 4, in another possible implementation, an application currently opened by the user is a Karaoke application, and the user has two commonly used windows in the Karaoke application. Therefore, a main window configuration corresponding to the Karaoke application is generated. For example, the main window configuration is a configuration in which the Karaoke application is displayed in the center in a maximized manner. In addition, a corresponding secondary window configuration may be generated based on a commonly used window in a process in which the user listens to a song. For example, the two commonly used windows are a list of songs followed of the user and a Karaoke window. For example, the secondary window configuration is a configuration in which the list of songs followed and the Karaoke window are respectively displayed on a right side and a left side.

Certainly, according to the foregoing embodiments, a person skilled in the art can easily learn that the main window is displayed leftward, and two secondary windows are displayed rightward (for example, respectively displayed at an upper right location and a lower right location). Further, a quantity of secondary windows provided in the foregoing embodiments is only a specific embodiment, and does not need to be considered as a limitation on the quantity of secondary windows. A person skilled in the art may configure multiple secondary windows (more than two secondary windows) based on an actual requirement. This should fall within the protection scope of the embodiments of the present disclosure. Details are not described herein again.

Further, to further improve user experience and improve an interaction aesthetic, a person skilled in the art may lay an application theme background at a bottom of a display screen of the terminal, and display the main window and the secondary window on the application theme background in a superimposed manner, to implement better user experience.

In this embodiment of the present disclosure, an independent display and a quick display are further provided for the user based on an existing simple application display or a step-by-step display performed based on a tap operation, so that an optimized display effect for the landscape mode is achieved based on the original portrait-mode display of the application, and a better terminal application experience effect is provided for the user.

Based on the foregoing technical solutions, an optimized landscape-mode display effect of an application that cannot be displayed in landscape mode and does not support multi-window display is achieved. The following further describes how to achieve the optimized landscape-mode display effect of the application that cannot be displayed in landscape mode and does not support multi-window display.

In this embodiment of the present disclosure, that a second landscape-mode configuration of the application is determined includes: a window quantity of to-be-displayed windows of the application is determined; when the window quantity is one, it is determined that a configuration in which the application is displayed in the center is regarded as the second landscape-mode configuration of the application; and when the window quantity is at least two, window parameter information is obtained, and the second landscape-mode configuration of the application is determined based on the window parameter information.

In a possible implementation, after it is determined that the current application supports multi-window display, landscape-mode display optimization is performed for the application. First, the window quantity of to-be-displayed windows of the application is determined. The to-be-displayed windows are task windows of a same task stack. For example, in an Android system based application display process, the to-be-displayed windows of the application may be multiple windows in a same ActivityStack stack. For example, in an embodiment, as shown in FIG. 5, the application is just started. In this case, only a home screen of the application needs to be displayed for the application. In other words, the window quantity of to-be-displayed windows of the application is one. Therefore, the application may be displayed in the center, to improve a display aesthetic. In this case, a configuration in which the application is displayed in the center may be regarded as the second landscape-mode configuration of the application.

Further, in this embodiment of the present disclosure, the display method further includes: after the configuration in which the application is displayed in the center is determined, in response to a boundary edition operation performed by a user, the configuration in which the application is displayed in the center is modified, to obtain a configuration obtained after a boundary modification; and the configuration obtained after the boundary modification is regarded as the second landscape-mode configuration of the application.

For example, after it is determined that the application is displayed in the center and a corresponding display configuration is obtained, whether the user performs a further boundary edition operation may be monitored in real time. If the user enters the boundary edition operation, a response is immediately triggered. For example, the user may define a display boundary of the application based on an actual requirement. In this case, a display width of the application may be increased/decreased based on the boundary edition operation performed by the user, and the like, so that the configuration in which the application is displayed in the center is modified to obtain the configuration obtained after the boundary modification, and the configuration obtained after the boundary modification is regarded as the second landscape-mode configuration of the application. If the user does not enter the boundary edition operation, an automatically generated display configuration is regarded as the second landscape-mode configuration of the application by default to perform the landscape-mode display.

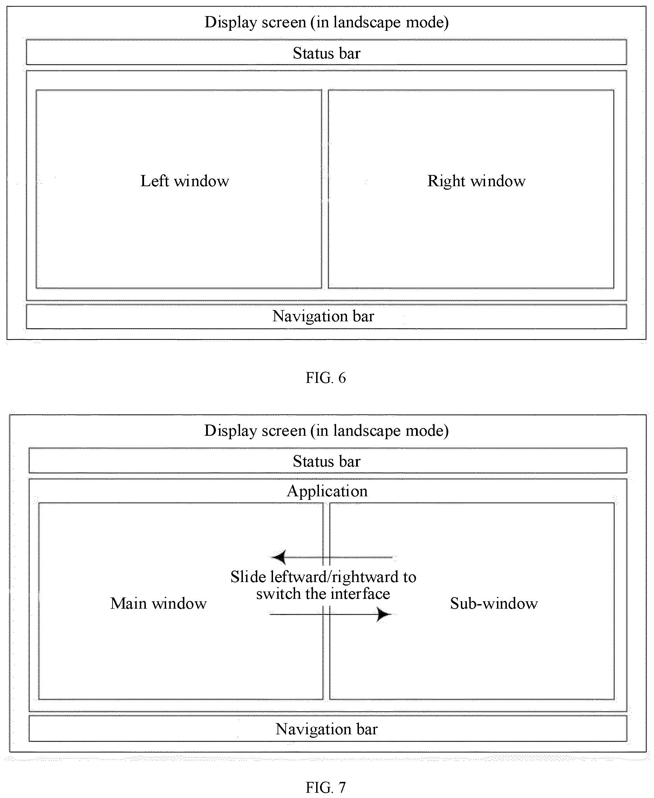

As shown in FIG. 6, in another embodiment, there are at least two to-be-displayed windows (for example, two to-be-displayed windows) of the application. In a display process, the window parameter information is first obtained, and the second landscape-mode configuration of the application is determined based on the window parameter information. For example, the window parameter information includes a window size and a window location. That the second landscape-mode configuration of the application is determined based on the window parameter information includes: a screen size of the terminal is obtained; multiple display areas of the terminal are determined based on the window size and the screen size; a display configuration of each to-be-displayed window is determined based on the window location and the plurality of display areas; and the second landscape-mode configuration of the application is determined based on the display configuration of each to-be-displayed window.

In a multi-window display process of the application, an activity window of the application is described by using WindowState on a system side. Therefore, a specific window boundary and location may be calculated in such a type of implementation. For example, DisplayFrames defines all boundaries of a current window. Therefore, boundary attributes such as mFrame, mDisplayFrame, mVisibleFrame, and mDecorFrame that correspond to DisplayFrames are changed, to determine the display boundary and a display location of the window. For example, if display resolution of a current terminal is 1920* 1080, the following may be defined: a default landscape-mode display width of a single window is set to 960, and the display location is set to [480, 1440]. In a case of a two-window display, it is set by default that a landscape-mode display width of a window is 955, a display location of a left window is [0, 955], and a display location of a right window is [965, 1920]. That is, a display configuration of each to-be-displayed window is determined, and the second landscape-mode configuration of the application is further determined.

In this embodiment of the present disclosure, the display method further includes: the window location is adjusted in response to an adjustment operation performed on the window location, to obtain an adjusted location; and the display configuration of each to-be-displayed window is determined based on the adjusted location and the plurality of display areas.

As shown in FIG. 7, in a possible implementation, the to-be-displayed window includes two windows. After the application is displayed in landscape mode based on the second landscape-mode configuration of the application, for example, a default main window in the two windows is displayed on a left side of the screen, and a default sub-window is displayed on a right side of the screen, whether an adjustment operation performed on window locations of the windows is obtained is monitored in real time. For example, at a moment, it is monitored that the user adjusts the window locations of the two windows by sliding one window. In other words, the adjustment operation performed on the window location is obtained. Therefore, a response is immediately made. For example, the window location of the window is adjusted based on the adjustment operation, an adjusted location is obtained, the display configuration of each to-be-displayed window is further determined based on the adjusted location and the plurality of display areas, and the application is displayed.

In this embodiment of the present disclosure, in the multi-window display process of the application, a response to a window adjustment operation performed by the user is made in real time, to further meet an actual screen observation requirement of the user and improve user experience.

In this embodiment of the present disclosure, the display method further includes: a current focus window is determined after the display operation is performed; in response to a touch event performed on the terminal, a touch area corresponding to the touch event is determined; whether the touch area is in the current focus window is determined; when the touch area is not in the current focus window, a window in which the touch area is located is regarded as a new current focus window; and an operation instruction corresponding to the touch event is executed.

Further, in this embodiment of the present disclosure, the determining a current focus window includes: the to-be-displayed window is traversed, and at least one first window in a first display state is determined in the to-be-displayed window, where the remaining window other than the at least one first window in the to-be-displayed window is in a second display state; a default focus window is determined in the first window; and the default focus window is regarded as the current focus window.

Because a system can record only one focus window at a same moment and make a corresponding operation response, after a display configuration of each window of the application is determined and a corresponding landscape-mode display is performed, the focus window needs to be further obtained in real time, to make an accurate response to a touch event performed on multiple windows. In a possible implementation, after the display operation is performed, the current focus window is determined. For example, in this embodiment of the present disclosure, the to-be-displayed window may be traversed, the to-be-displayed window is located in same ActivityStack, and a first window in a display state is determined in the to-be-displayed window. For example, the first window includes a main window displayed on a left side of the screen and a sub-window displayed on a right side of the screen, and the remaining window in the to-be-displayed window is in a display paused state or a cleared state. Then, the default focus window is determined in the first window. For example, the main window may be set to the default focus window in advance. After the application is started, the main window displayed after the application is started is the default focus window.

After the default focus window is determined, the default focus window is regarded as the current focus window. In this case, whether there is a touch event performed on the terminal is monitored in real time. For example, at a moment, the user touches the display screen of the terminal. Therefore, the terminal responds to the touch event, and first determines a touch area corresponding to the touch event. For example, the terminal may determine the touch area corresponding to the touch event based on horizontal and vertical coordinates of the touch event on the terminal, further determine whether the touch area is in the current focus window, and when the touch area is not in the current focus window, use, as the new current focus window, a window in which the touch area is located, to implement switching of the focus window. Then, an operation instruction corresponding to the touch event is executed, to implement an accurate response to the touch event.

In this embodiment of the present disclosure, after the display operation is performed, a current focus window of an application displayed in split screen is updated or switched in real time, to accurately execute the touch event, and improve user experience.

In this embodiment of the present disclosure, the at least one first window includes a parent display window and at least one display sub-window, and that the touch event is executed includes: an event type of the touch event is determined; when the event type is a window jump event, the display sub-window is cleared, and a new display sub-window corresponding to the touch event is displayed; and displaying of the current focus window is refreshed when the event type is a non-window jump event.

In a possible implementation, after the touch event is obtained, an event type of the touch event is first determined. For example, in this embodiment of the present disclosure, the event type includes a window jump event and a non-window jump event. The window jump event is an event of a jump from the current window to another window. For example, if a touch operation performed by the user is tapping a jump link, it may be determined that the touch event is a window jump event, and the non-window jump event may include but is not limited to an event such as text viewing or picture magnification (a picture is tapped for display in a magnified manner). In another embodiment, if the touch event of the user is tapping a jump link, a display sub-window is cleared (regardless of whether the window jump event occurs in the parent display window or the display sub-window, if the window jump event occurs in the parent display window, it is determined that another sub-window is to be viewed, and therefore, a clearing operation is performed on a display sub-window on a right side; or if the window jump event occurs in the display sub-window, a current display sub-window also needs to be cleared to display a new display sub-window). Then, the touch event is executed, and the corresponding new display sub-window is displayed. For example, refreshing is performed at a location of the current display sub-window to display a window that is to be displayed through a jump.

In this embodiment of the present disclosure, a corresponding window is updated and displayed based on the event type of the touch event of the user, to prevent a same window from being added to the sub-window on the right side for multiple times, effectively avoid an abnormal display and an abnormal response, improve application use stability, and improve user experience.

In this embodiment of the present disclosure, the display method further includes: after the display operation is performed, in response to a portrait-mode operation of the terminal, the parent display window in portrait mode is displayed; and the at least one display sub-window is set to the second display state.

Further, in this embodiment of the present disclosure, the display method further includes: each display sub-window is set to the first display state in response to a landscape-mode operation performed on the terminal after the portrait-mode operation; and the display operation is performed on the at least one first window based on the second landscape-mode configuration.

A person skilled in the art easily learns that, most in-vehicle terminals are fixedly disposed on a vehicle. However, a detachably disposed in-vehicle terminal also exists on the vehicle. For such a terminal, when the user holds the terminal up and places the terminal upright, if the landscape-mode display manner is still used, user experience still becomes poorer. Therefore, dynamic display switching needs to be automatically performed based on an actual placement state of the terminal.

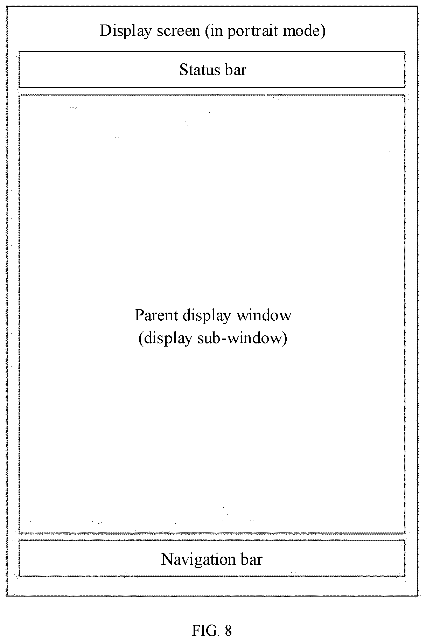

As shown in FIG. 8, in a possible implementation, after the display operation is performed, whether a portrait-mode operation is performed on the terminal is monitored in real time. For example, at a moment, if it is monitored that the terminal is placed upright, in other words, a portrait-mode operation performed on the terminal is obtained, a response is immediately made. Specifically, when multiple windows of the application are currently displayed in split screen, the parent display window of the application is displayed in portrait mode, and the at least one display sub-window is set to the second display state. For example, the parent display window is displayed in portrait mode, and the remaining display sub-window is superimposed at a lower part on the parent display window to pause displaying.

Further, after a response is made to the portrait-mode operation, whether a landscape-mode operation after the portrait-mode operation is obtained is further monitored. For example, at another moment, if it is monitored that the user returns the terminal to landscape mode, in other words, the landscape-mode operation after the portrait-mode operation is obtained, each display sub-window is set to the first display state. For example, each display sub-window is reset to a state in which displaying is currently performed, and then the display operation is performed on the at least one first window based on the second landscape-mode configuration, so that displaying of an application that does not support landscape-mode display or displaying performed through adaptive portrait-mode switching is implemented in a process of switching between landscape mode and portrait mode of the terminal, thereby effectively improving user experience and meeting an actual requirement of the user.

The following describes a display apparatus for a terminal according to an embodiment of the present disclosure with reference to the accompanying drawings.

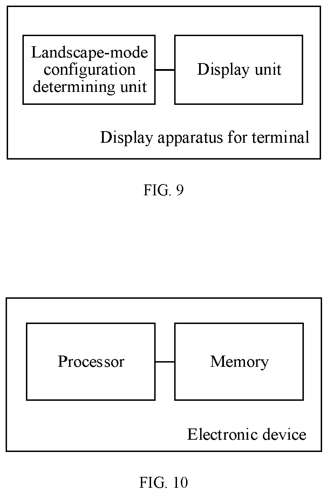

As shown in FIG. 9, based on a same inventive concept, an embodiment of the present disclosure provides a display apparatus for a terminal. The display apparatus includes: a landscape-mode configuration determining unit, configured to determine a landscape-mode display configuration of an application based on a portrait-mode display manner of the application when the terminal is in landscape mode; and a display unit, configured to perform a display operation on the application based on the landscape-mode display configuration, where the application does not support landscape-mode display.

As shown in FIG. 10, further, an embodiment of the present disclosure further provides an electronic device, including: at least one processor; and a memory communicatively connected to the at least one processor. The memory stores instructions which, when executed by the at least one processor, cause the at least one processor to perform the display method provided in the embodiments of the present disclosure.

Further, an embodiment of the present disclosure further provides a computer-readable storage medium. The computer-readable storage medium stores a computer program; and when the program is executed by a processor, the method provided in the embodiments of the present disclosure is implemented.

The foregoing describes in detail an optional implementation of the embodiments of the present disclosure with reference to the accompanying drawings. However, the embodiments of the present disclosure are not limited to specific details in the implementations. Within a technical concept scope of the embodiments of the present disclosure, multiple simple variants of the technical solutions of the embodiments of the present disclosure may be obtained, and these simple variants all fall within the protection scope of the embodiments of the present disclosure.

In addition, it should be noted that various specific technical features described in the specific implementations may be combined in any proper manner without contradiction. To avoid unnecessary repetition, various possible combination manners are not described otherwise in the embodiments of the present disclosure.

A person skilled in the art may understand that all or some of the steps of the method in the embodiments may be completed by instructing related hardware by using a program. The program is stored in a storage medium, and includes several instructions for instructing a single-chip microcomputer, a chip, or a processor to perform all or some of the steps of the method in the embodiments of the present disclosure. The foregoing storage medium includes any medium that may store program code such as a USB flash drive, a removable hard disk, a read-only memory (ROM), a random access memory (RAM), a magnetic disk, or a compact disc.

In addition, different implementations of the embodiments of the present disclosure may be randomly combined, provided that a combination violates to the idea of the embodiments of the present disclosure, the combination should also be considered as content disclosed in the embodiments of the present disclosure.

## Claims

1. A display method for a terminal, the display method comprising:
determining a landscape-mode display configuration of an application based on a portrait-mode display manner of the application when the terminal is in landscape mode; and
performing a display operation on the application based on the landscape-mode display configuration, the application not supporting landscape-mode display.

2. The display method according to claim 1, wherein the determining a landscape-mode display configuration of an application based on a portrait-mode display manner of the application comprises:
obtaining portrait-mode window configuration information of the application;
determining, based on the portrait-mode window configuration information, whether the application supports multi-window display;
determining a first landscape-mode configuration of the application if the application does not support multi-window display, wherein the first landscape-mode configuration is a single-screen display configuration of the application;
determining a second landscape-mode configuration of the application if the application supports multi-window display, wherein the second landscape-mode configuration is a split-screen display configuration of the application; and
regarding the first landscape-mode configuration or the second landscape-mode configuration as the landscape-mode display configuration.

3. The display method according to claim 2, wherein the determining a first landscape-mode configuration of the application comprises:
obtaining at least one commonly used window of the application;
determining a main window configuration corresponding to the portrait-mode window configuration information, and determining a secondary window configuration corresponding to the at least one commonly used window; and
determining the first landscape-mode configuration of the application based on the main window configuration and the secondary window configuration.

4. The display method according to claim 2, wherein the determining a second landscape-mode configuration of the application comprises:
determining a window quantity of to-be-displayed windows of the application;
when the window quantity is one, determining that a configuration in which the to-be-displayed window of the application is displayed in the center is regarded as the second landscape-mode configuration of the application; and
when the window quantity is at least two, obtaining window parameter information, and determining the second landscape-mode configuration of the application based on the window parameter information.

5. The display method according to claim 4, the display method further comprising:
after the configuration in which the to-be-displayed window of the application is displayed in the center is determined, in response to a boundary edition operation performed by a user,
modifying the configuration in which to-be-displayed window of the application is displayed in the center, to obtain a configuration obtained after a boundary modification; and
regarding the configuration obtained after the boundary modification as the second landscape-mode configuration of the application.

6. The display method according to claim 4, wherein the window parameter information comprises a window size and a window location, and the determining the second landscape-mode configuration of the application based on the window parameter information comprises:
obtaining a screen size of the terminal;
determining a plurality of display areas of the terminal based on the window size and the screen size;
determining a display configuration of each to-be-displayed window based on the window location and the plurality of display areas; and
determining the second landscape-mode configuration of the application based on the display configuration of each to-be-displayed window.

7. The display method according to claim 6, the display method further comprising:
adjusting the window location in response to an adjustment operation performed on the window location, to obtain an adjusted location; and
determining the display configuration of each to-be-displayed window based on the adjusted location and the plurality of display areas.

8. The display method according to claim 4, the display method further comprising:
determining a current focus window after the display operation is performed;
determining, in response to a touch event performed on the terminal, a touch area corresponding to the touch event;
determining whether the touch area is in the current focus window;
when the touch area is not in the current focus window, regarding a window in which the touch area is located as a new current focus window; and
executing an operation instruction corresponding to the touch event.

9. The display method according to claim 8, wherein the determining a current focus window comprises:
traversing the to-be-displayed window, and determining at least one first window in a first display state in the to-be-displayed window, wherein the remaining window other than the at least one first window in the to-be-displayed window is in a second display state;
determining a default focus window in the first window; and
regarding the default focus window as the current focus window.

10. The display method according to claim 9, wherein the at least one first window comprises a parent display window and at least one display sub-window, and the executing the touch event comprises:
determining an event type of the touch event;
when the event type is a window jump event, clearing the display sub-window, and displaying a new display sub-window corresponding to the touch event; and
refreshing displaying of the current focus window when the event type is a non-window jump event.

11. The display method according to claim 10, the display method further comprising:
after the display operation is performed, in response to a portrait-mode operation of the terminal,
displaying the parent display window in portrait mode; and
setting the at least one display sub-window to the second display state.

12. The display method according to claim 11, the display method further comprising:
setting each display sub-window to the first display state in response to a landscape-mode operation performed on the terminal after the portrait-mode operation; and
performing the display operation on the at least one first window based on the second landscape-mode configuration.

13. A display apparatus for a terminal, the display apparatus comprising:
a landscape-mode configuration determining unit, configured to determine a landscape-mode display configuration of an application based on a portrait-mode display manner of the application when the terminal is in landscape mode; and
a display unit, configured to perform a display operation on the application based on the landscape-mode display configuration, the application not supporting landscape-mode display.

14. An electronic device, comprising:
at least one processor; and
a memory communicatively connected to the at least one processor,
the memory storing instructions which, when executed by the at least one processor, cause the at least one processor to implement the display method according to any one of claims 1 to 12.

15. A computer-readable storage medium, storing a computer program which, when executed by a processor, cause the processor to implement the display method according to any one of claims 1 to 12.
